Europäisches Patentamt

European Patent Office

Office européen des brevets

(11) Publication number: **0 091 123**
**B1**

## (12) EUROPEAN PATENT SPECIFICATION

(45) Date of publication of patent specification: **03.09.86**

(51) Int. Cl.⁴: **H 02 K 3/26**

(21) Application number: **83103321.2**

(22) Date of filing: **05.04.83**

(54) **Three-phase flat coils.**

(30) Priority: **05.04.82 JP 57041/82**
**28.09.82 JP 169221/82**

(43) Date of publication of application:
**12.10.83 Bulletin 83/41**

(45) Publication of the grant of the patent:
**03.09.86 Bulletin 86/36**

(84) Designated Contracting States:
**DE FR GB**

(56) References cited:
**FR-A-2 408 937**
**FR-A-2 446 027**
**US-A-2 414 571**
**US-A-3 060 337**
**US-A-3 231 774**

(73) Proprietor: **NIPPONDENSO CO., LTD.**
**1, 1-chome, Showa-cho**
**Kariya-shi Aichi-ken (JP)**

(72) Inventor: **Kanayama, Kenji**
**30, Tennocho-6-chome**
**Kariya-shi (JP)**
Inventor: **Sugi, Hidekuni**
**43, Karayamacho-2-chome**
**Chikusa-ku Nagoya (JP)**

(74) Representative: **Bühling, Gerhard, Dipl.-Chem.**
**et al**
**Patentanwaltsbüro Tiedtke-Bühling-Kinne**
**Grupe-Pellmann-Grams-Struif Bavariaring 4**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Description

## Background of the invention

This invention relates to a three-phase flat coil having flat windings for three-phase alternating current for use in, for example, a printed circuit motor or a three-phase alternator.

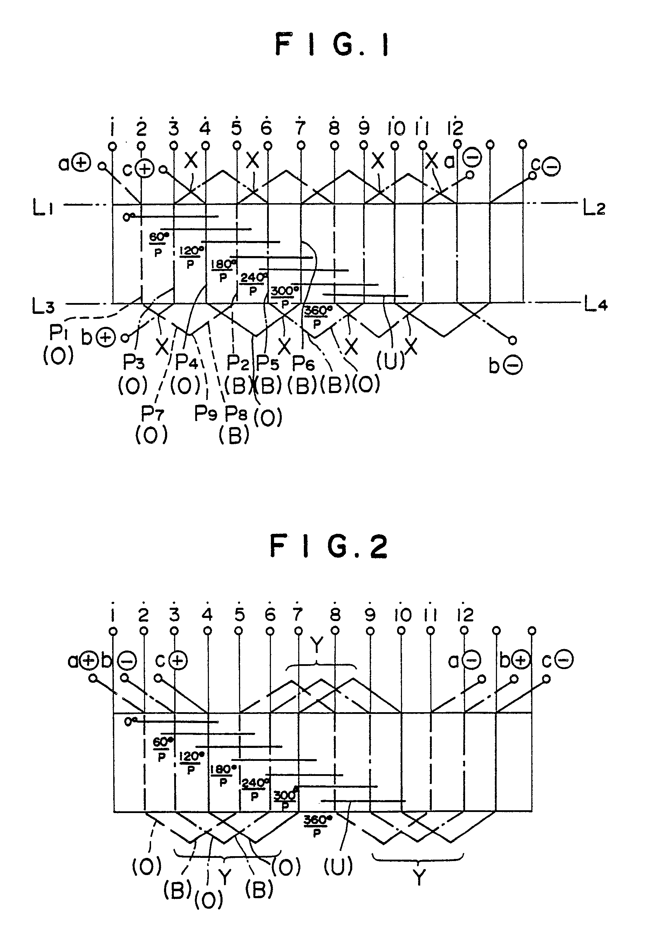

Hitherto, in such three-phase alternating current coils, a winding for one phase has been wound in an opposite direction to that of the remaining two windings for simplifying the end treatment or working. Fig. 1 is a winding diagram of a conventional three-phase alternating current coil in which a winding for a phase *b* is wound in an opposite direction to windings for phases *a* and *c* to provide a close arrangement of their positive and negative terminals in the end treatment or working.

In order to provide a printed coil formed by such a conventional winding method as shown in Fig. 1, however, there are disadvantages that because of the opposite winding direction of the winding for the phase *b* this winding crosses the windings for the phases *a* and *c* at portions *X*, and thus electrical insulation has to be provided at the portions *X*.

This will now be described more in detail.

References $\dot{1}$ to $\dot{1}2$ shown in Fig. 1 designate numbers of positions of conductor portions. In case of a printed coil, there is required no conductor containing groove, different from a ring-like core.

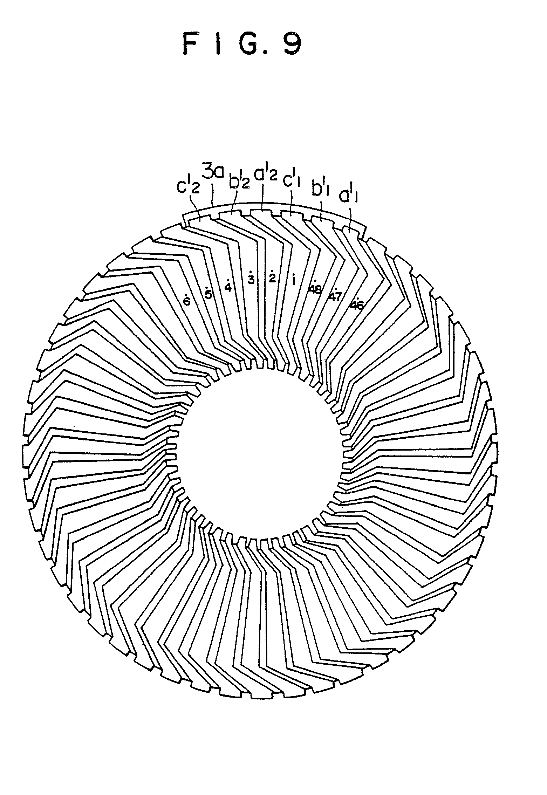

In Fig. 1, a disc-like printed coil is shown in a web-like development. Therefore, a line $L_1$—$L_2$ shows an outer periphery of an effective area of the disc-like printed coil, and a line $L_3$—$L_4$ shows an inner periphery of the effective area of the coil. This will be apparent when referring to Fig. 8 showing the outer configuration of an actual printed coil.

In Fig. 1, a conductor portion P1 is provided on a front side of the disc-like coil and bent at the inner periphery thereof so that a portion P2 extends on a back side of the disc.

In this way, portions P3 and P4 are also provided on the front side of the disc-like coil, and portions P5 and P6 are on the back side thereof.

In this case, a conductor portion P7 of a non-effective area on the inner periphery is on the front side, and a portion P8 is on the back side. A portion P9 is on a boundary between the front and back sides and passes through an inner periphery $L_5$ of the disc of Fig. 8.

As described above, there are portions provided on the front and back sides. In Fig. 1, the portions provided on the front side are referred to by (O), and the portions provided on the back side are referred to by (B).

It is thus apparent that there are crossing portions *X* at which two front conductor portions or two back conductor portions are crossing each other. Such portions have to be formed as three-dimensional crossings to provide electrical insulation therebetween, but such insulation will be difficult and the coil will become large and bulky.

Moreover, in the wiring arrangement of Fig. 1 the crossing portions *X* are positioned dispersedly throughout the inner and outer peripheries of the printed coil.

To solve this problem, it is thinkable to use a winding (magnet wire) having an insulating coating, but this will render the crossings thick and will make it impossible to manufacture a thin and flat printed coil.

US—A—3 231 774 discloses a printed flat armature coil having three phase windings and eight poles. The coil has 49 turns, the winding-in and winding-out portions of which are separately provided on both sides, i.e. on front and back side of an insulating disc. Thus three terminals are located on the front side and three terminals are located on the back side, being all spaced angularily. The 49 turns are divided to one winding having 23 turns and two windings having 13 turns each. Therefore the windings are extremely asymmetrically arranged, so that asymmetrical distortion will be caused. In the different windings, disc sectors are containing different numbers of radial conductors, so that these sectors cover different angular spaces. Further, the windings are connected such that at a given radial conductor position the current flow direction on the front side is opposite to that on the back side.

It is the object of the present invention to provide a three-phase flat coil, in which crossings are reduced in number to the utmost and the reduced crossings are collectively provided at substantially one point or in a very small area.

This object is achieved according to the present invention by the features stated in the characterising part of Claim 1.

Thus in accordance with the present invention there is provided a three-phase flat coil having a solid and firm insulating construction of the crossings, which is easily to be manufactured. Further this coil is in a generally flat and thin form, even if the size of the bridging member is increased. Consequently by means of the flat coil of the present invention in a rotary electric machine incorporating this flat coil an air gap or the like can be reduced to minimize the magnetic resistance of a magnetic circuit and to increase the output. Also by the arrangement of the terminals according to the present invention the wiring is much easier.

Further advantageous features of the three-phase flat coil according to the present invention are stated in the subclaims.

Particularly, the disposition of at least one further disc according to Claim 5 provides a flat coil, with high output with an easy connection between the disc and therefore an easy manufacturing of the flat coil.

## Brief description of the drawings

Fig. 1 is a development showing a known winding arrangement;

Fig. 2 is a development showing the principle of a winding arrangement of a three-phase coil in accordance with the present invention;

Figs. 3 and 4 are vector diagrams showing the generating conditions of electromotive forces in the three-phase coils of Figs. 1 and 2;

Fig. 5 is a development of a first embodiment of the three-phase flat coil in accordance with the present invention;

Fig. 6 is a wiring diagram of a bridging member of the three-phase coil of Fig. 5;

Fig. 7 is a wiring diagram of the coil of Fig. 5 in star connection;

Fig. 8 is a front view of a second embodiment of the coil of the present invention before the finishing thereof;

Fig. 9 is a rear view of the coil of Fig. 8;

Fig. 10 is a development of the second embodiment of the coil;

Fig. 11 is a diagrammatic representation of the coil of Fig. 10 in the finished condition;

Fig. 12 is a practical wiring diagram of a bridging member to be assembled with the coil of Fig. 10;

Fig. 13 is a part-sectional view of a three-phase alternator incorporating the second embodiment of the coil;

Fig. 14 is a fragmentary section of a part of a housing of the alternator of Fig. 13;

Fig. 15 is a section of the bridging member as viewed in a direction of an arrow XV in Fig. 13.

Fig. 16 is a section taken along a line XVI—XVI in Fig. 15;

Fig. 17 is a simple and diagrammatic representation of electrical connection of the coil of Fig. 10;

Fig. 18 is a diagrammatic representation of electrical connection of a multi-layered three-phase coil with additional windings, which is a third embodiment of the present invention;

Figs. 19 to 21 show the construction of the third embodiment, Fig. 19 being a section taken along a line XIX—XIX in Fig. 21, Fig. 20 being a fragmentary section taken along a line XX—XX in Fig. 21, and Fig. 21 being a section similar to that of Fig. 15 and showing the bridging member area;

Fig. 22 is a front view of a fourth embodiment of the present invention;

Fig. 23 is a fragmentary section taken along a line XXIII—XXIII in Fig. 22;

Fig. 24 shows a strip in a manufacturing step;

Fig. 25 shows the strip of Fig. 24 in its finished condition;

Fig. 26 is a section taken along a line XXVI—XXVI in Fig. 25;

Fig. 27 is a front view of a fifth embodiment of the present invention;

Fig. 28 is a fragmentary section in an enlarged scale of a portion shown by a circle XXVIII in Fig. 27;

Fig. 29 is a section taken along a line XXIX—XXIX in Fig. 28;

Fig. 30 is a sectional side view of the coil of Fig. 27; and

Fig. 31 is a section taken along a line XXXI—XXXI in Fig. 30.

Detailed description of the embodiment

Fig. 2 is a development similar to that of Fig. 1 and shows a winding arrangement which is designed by and applied to the present invention.

The arrangement of Fig. 2 has a b-phase winding wound in the opposite direction to that of the b-phase winding of Fig. 1, and a-phase, b-phase and c-phase windings are all wound in the same direction in a wave form. Instead, the polarity of ends of the b-phase winding is reversed so that the direction of flow of current through the b-phase winding of Fig. 2 is opposite to the direction of flow of current through the b-phase winding of Fig. 1. In the drawings, the references ⊕ and ⊖ designate positive and negative polarities, respectively.

In other words, the phase of the b-phase winding of Fig. 2 is deflected by an angle of 180° from the phase of the b-phase winding of Fig. 1. In order to remove this deflection of phase, the positive and negative polarities of the ends of the b-phase winding are changed to each other, so that the same phase condition is established by changing the end b+ of the b-phase winding of Fig. 1 to the end b− of the b-phase winding of Fig. 2.

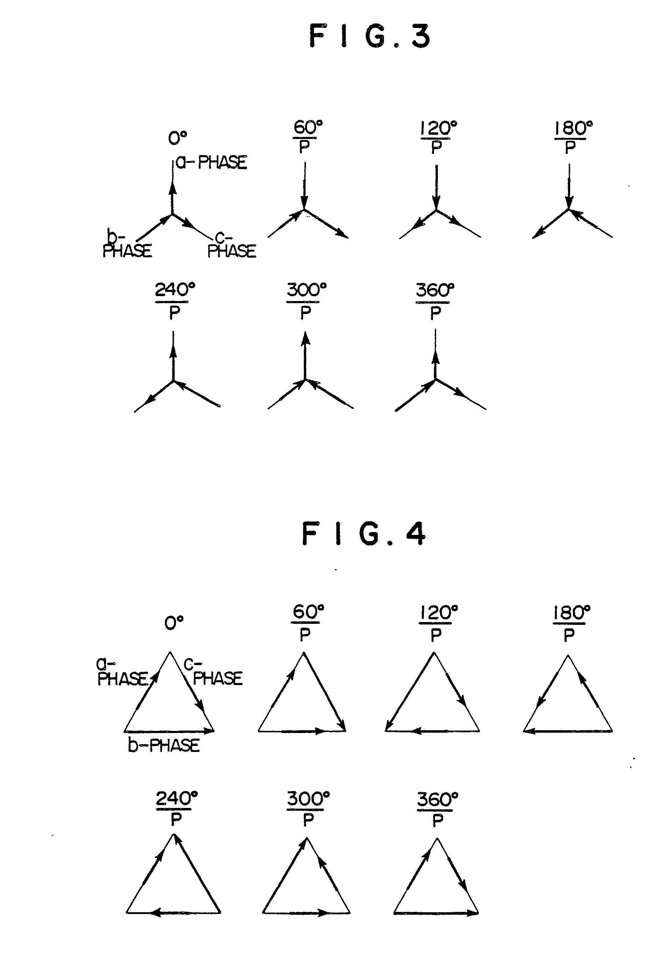

The electromotive forces generated in a three-phase alternator are shown in Fig. 3 in the case of star connection and in Fig. 4 in the case of delta connection. In Figs. 1 and 2, a reference (U) designates a pole of N- or S-polarity of the magnetic field and moves through conductor positions at angles of 0°, 60°/P, 120°/P, . . . 360°/P, where $P$ designates a number of pole pairs.

Figs. 3 and 4 show the directions of generation of the electromotive forces at the individual angles in the a-phase, b-phase and c-phase windings. (In Fig. 3, outward arrows designate currents from positive to negative, and in Fig. 4 clockwise arrows designate currents from positive to negative.)

In the conventional windings of Fig. 1, the electromotive forces are generated as shown in Fig. 3 in the case of star connection, and as shown in Fig. 4 in the case of delta connection. The windings of Fig. 2 used with the present invention also generate the same electromotive forces as shown in Fig. 3 in the case of star connection and as shown in Fig. 4 in the case of delta connection.

In the winding arrangement of Fig. 2, apparent crossings, are caused in portions $Y$. However, all the crossings are formed on the front and back sides of the winding portions as referred to by (O) and (B), respectively. Therefore, it is not necessary that the portions $Y$ are provided with specific insulation to be interposed between the winding portions.

In the windings shown in Figs. 1 and 2, a part of conductor positions on the front and back sides of the disc-like flat coil is not used. For example, the positions with the numbers 2, 3 and 4 are provided with conductor portions only on their front side, whereas no conductor portion is provided on the back side of the disc-like coil corresponding to the position numbers $\dot{2}$, $\dot{3}$ and $\dot{4}$. In the positions with the numbers $\dot{5}$, $\dot{6}$ and $\dot{7}$, only the back side is utilized.

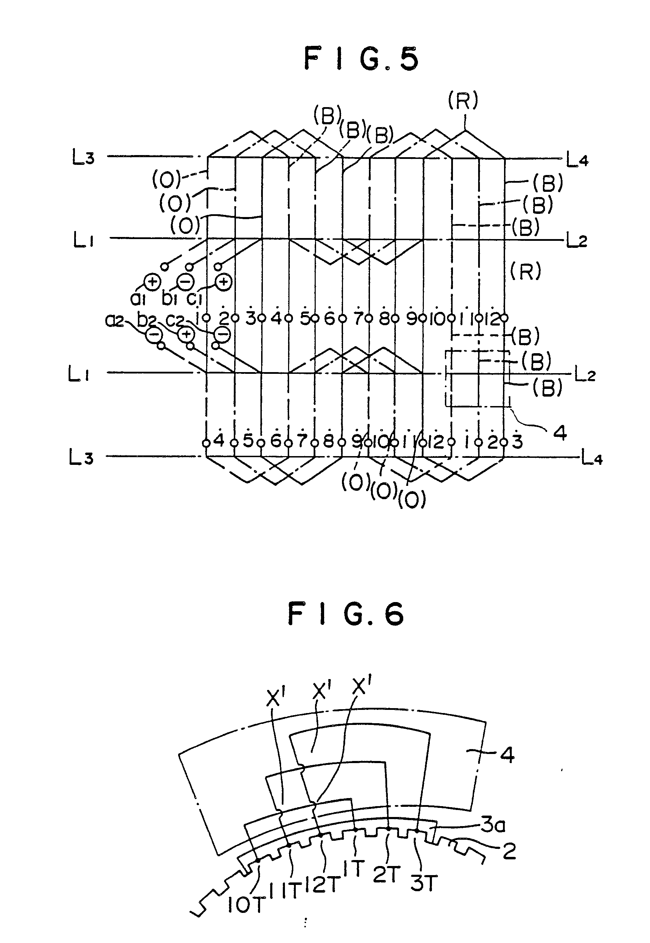

Particularly, such a winding arrangement using only either the front or back side is very inefficient. Therefore, the coil of the present invention has windings shown in Fig. 5.

The coil of Fig. 5 which is a first embodiment of the present invention has twelve conductor positions which are all containing conductor portions. The number P of the pole pairs is two in this case.

In Fig. 5, references $a_1$, $b_1$, $c_1$, $a_2$, $b_2$, and $c_2$ designate output terminals, $\oplus$ and $\ominus$ designate ths polarity, and (R) designates a bent-over portion.

In this Fig. 5, furthermore, the winding portion positioned on the front side of the disc-like flat coil is referred to by (O), and the portion positioned on the back side is referred to by (B). The lines $L_1$—$L_2$ and $L_3$—$L_4$ designate the outer and inner peripheries, respectively, of the disc-like coil.

As will be apparent from Fig. 5, winding portions are provided on the front and back sides of position numbers 10, 11 and 12, but electrical connection should be provided from the back side of the position numbers 10, 11, and 12 to the back side of the position numbers $\dot{1}$, $\dot{2}$ and $\dot{3}$.

Among conductor positions . . . $\dot{7}$, $\dot{8}$, $\dot{9}$, $\dot{10}$, $\dot{11}$, $\dot{12}$, $\dot{1}$, $\dot{2}$, $\dot{3}$, $\dot{4}$, $\dot{5}$, $\dot{6}$ . . . circumferentially along the outer periphery of the disc-like coil, three electrical connections for a-phase, b-phase, and c-phase from the positions $\dot{10}$, $\dot{11}$ and $\dot{12}$ to the positions $\dot{1}$, $\dot{2}$, and $\dot{3}$ are made through three three-dimensional crossings $X'$ as diagrammatically shown in Fig. 6, wherein the winding portions are mutually insulated. In Fig. 6, references 1T, 2T, 3T, 10T, 11T and 12T designate bridging terminals provided on the outer periphery of the winding portions connected to the conductor portions positioned at the position numbers $\dot{1}$, $\dot{2}$, $\dot{3}$, $\dot{10}$, $\dot{11}$ and $\dot{12}$, respectively; 2 is a winding portion and 3a is a projection of the insulating disc.

In this manner, the coil of the present invention has the crossings $X'$ but they are reduced in number and collectively provided substantially at one point of the outer periphery of the disc-like coil. The crossings $X'$ are shown as a bridging member 4 in Fig. 5.

It is, therefore, apparent that the construction of Fig. 6 is much more simple than that of Fig. 1 wherein a larger number of crossings are dispersedly provided on both the inner and outer peripheries.

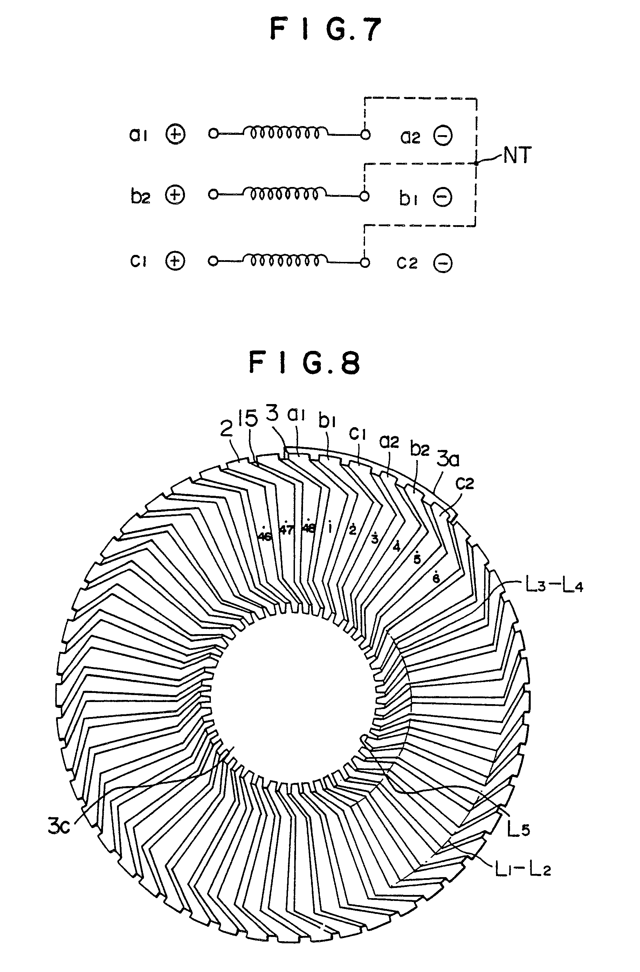

Fig. 7 is a more diagrammatical and simple representation of the wiring diagram of Fig. 5; for example, lines shown by dotted lines are added as bridging lines to form a neutral output terminal (NT), while the terminals $a_1$, $b_1$, and $c_1$ are provided as three-phase alternating current output terminals to form a three-phase flat coil having star connection usable as an armature coil for a three-phase alternator.

The second embodiment will now be described.

This embodiment has eight pole pairs and forty eight conductor positions and is shown in Fig. 8 in a front view and in Fig. 9 in a back view.

As will be apparent from these figures, such a bridging member 4 with the crossings as shown in Fig. 5 is not yet attached at the printed coil of Figs. 8 and 9.

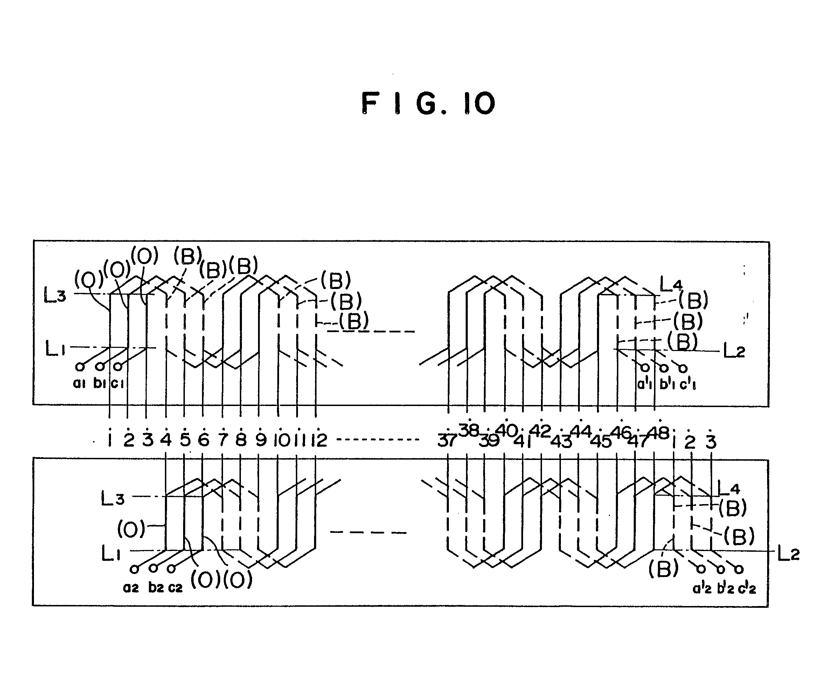

Fig. 10 is a development of the printed coil having eight pole pairs and forty eight conductor positions but having not yet a bridging member connected.

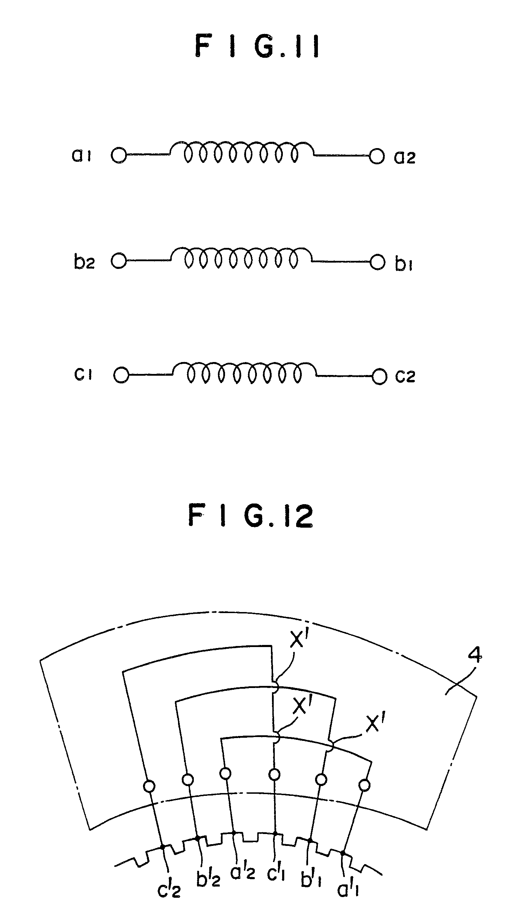

In Fig. 10, references $\dot{1}$ to $\dot{48}$ are position numbers. In order to form a three-phase coil as diagrammatically shown in Fig. 11 from the coil of Fig. 10 by making electrical connection with a bridging member similar to the coil of Fig. 5, terminals $a_1'$, $b_1'$ and $c_1'$ connected to conductor portions on the back side at the positions $\dot{46}$, $\dot{47}$ and $\dot{48}$ of Fig. 10 and terminals $a_2'$, $b_2'$ and $c_2'$ connected to conductor portions on the back side of the positions $\dot{1}$, $\dot{2}$ and $\dot{3}$ have to be connected by the bridging member.

Fig. 12 is a digrammatic representation of such a bridging member 4.

The construction of the coil of Figs. 8 and 9 will be described below.

Figs. 8 and 9 show front and back sides of a single layered three-phase flat coil. In these drawings, 2 designates conductor portions particularly made of copper strips, and 3 designates an insulating disc, such as a mica disc or an insulating resin disc, having an opening 3c at its center portion. The copper strips 2 are made in a quite same shape and are welding on the front and back sides across the insulating disc 3; gaps between adjacent copper strips 2 are filled with an insulating silicone resin material 15 to fix the strips 2, thereby forming a three-phase alternating current coil.

3a is a part of the insulating disc 3 slightly projecting outwardly from the outer periphery. Provided adjacent to this projecting portion 3a of the insulating disc is a bridging member 4 shown in Fig. 12.

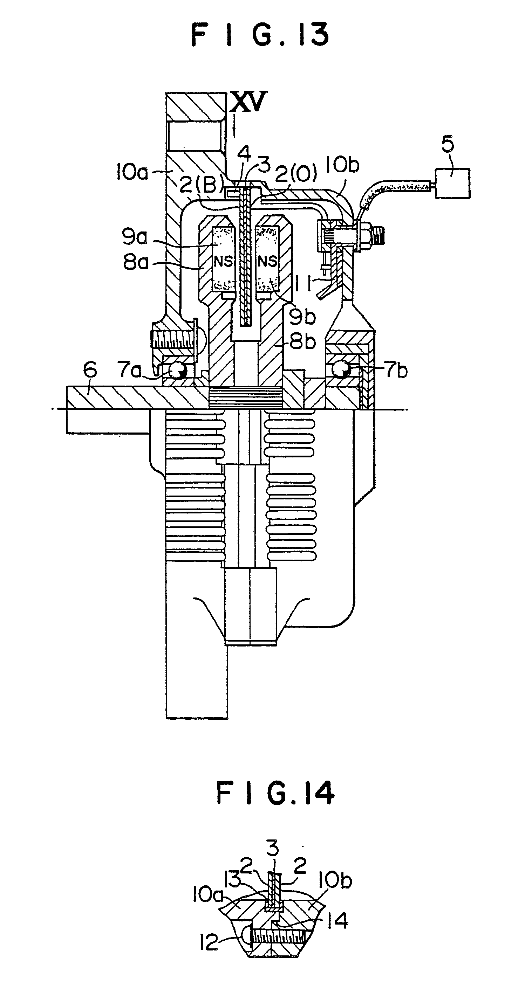

A three-phase alternator including as an armature coil the three-phase flat coil of the second embodiment in which the conductor portions are provided at all the conductor positions of the front and back sides and which has eight pole pairs $P$ and forty eight conductor positions will be described by reference to Figs. 13 to 16.

In Fig. 13, 2 designates copper strips on the front and back sides of the printed coil to constitute conductor portions, 3 being an insulating disc for insulating the copper strips on the front and back sides, and the three-phase flat coil of the present invention being mainly formed by the strips 2 and the disc 3.

4 designates a bridging member constituting a single crossing portion which corresponds to the portion diagrammatically shown in Fig. 12.

5 is a connector, 6 is a shaft rotatably supported by bearings 7a and 7b. 8a and 8b are rotors fixed to the shaft 6, and 9a and 9b are permanent magnets incorporated in the rotors 8a and 8b. 10a and 10b are housing portions and 11 is a known thyristor bridge for commutating the three-phase current.

Fig. 14 is a section showing a fitted portion between the front and rear housing portions 10a and 10b; 14 is the fitted portion, 12 is a fixing throughbolt, and 13 is an insulating plate for holding the conductor portions 2.

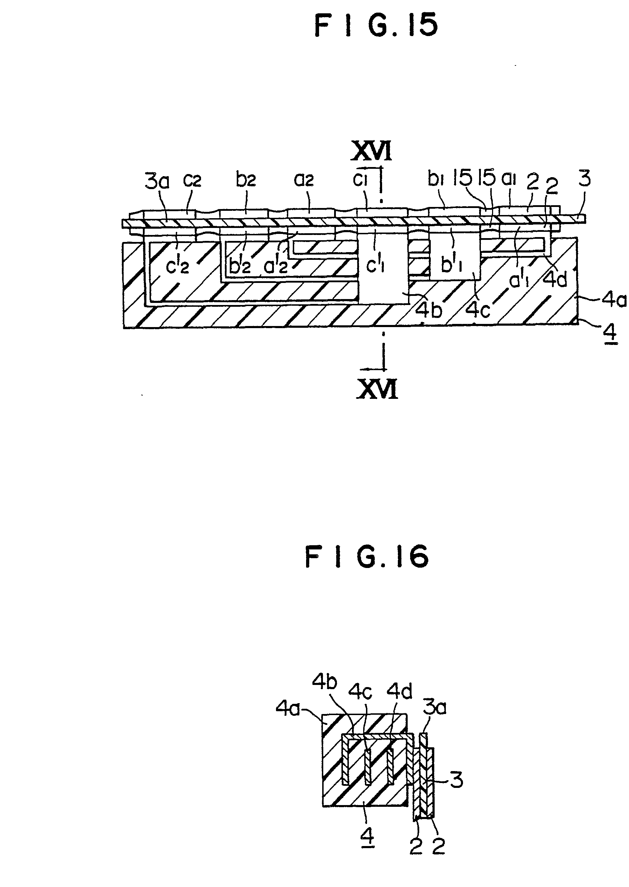

Figs. 15 and 16 are sectional views showing more in detail the bridging member 4 constituting the single crossing portion of Figs. 12 and 13; Fig. 15 is as viewed in the direction of the arrow XV in Fig. 13, and Fig. 16 is a section taken along the line XVI—XVI in Fig. 15. The references designating the terminals in Fig. 15 are same as those shown in Fig. 12.

In Fig. 15, 15 is an insulating silicone resin material for fixing the copper strips 2, 4a is an insulating member, such as an insulating resin or ceramic, and 4b, 4c and 4d are connecting copper webs or bus bars made of a metal.

The bridging member 4 having the crossings is located within the front housing portion 10a as shown in Fig. 13.

The third embodiment of the invention will be described below.

The third embodiment is made by overlapping a plurality of disc-like flat coils having such an outer configuration as shown in Figs 8 and 9 to generate an increased output.

The third embodiment is described with the aid of Figs. 8, 9 and 10 showing the second embodiment.

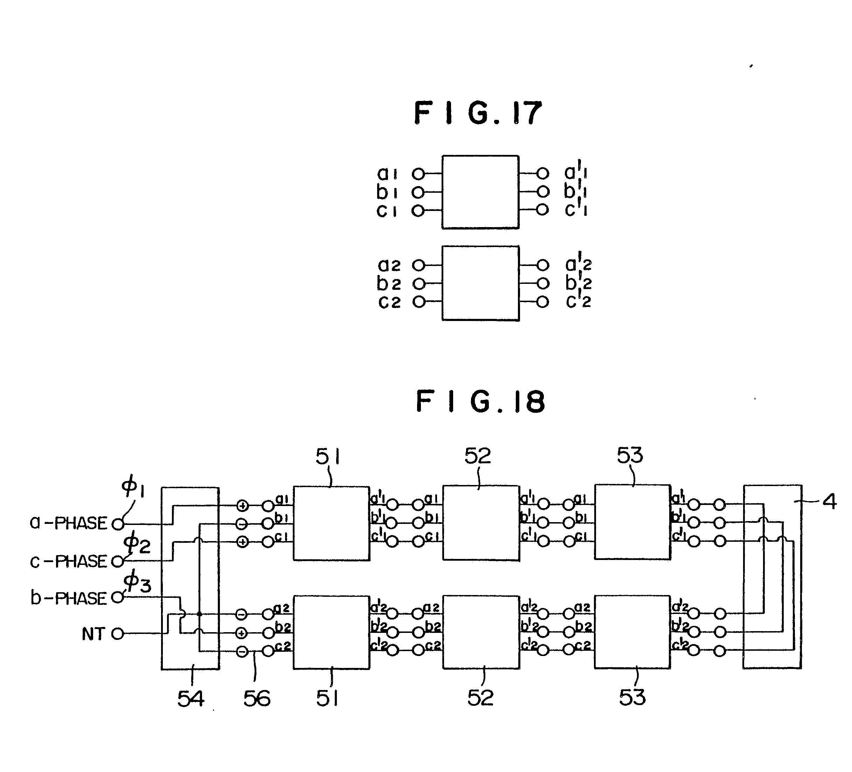

It has been described hereinbefore that the wiring diagram of the single disc-like coil of Figs. 8 and 9 can be shown by Fig. 10. A more simplified representation of the circuit of Fig. 10 is shown in Fig. 17.

Therefore, if three discs as shown in Figs. 8 and 9 are overlapped with and electrically connected in series to each other, the connection will be as shown in Fig. 18. As will be apparent from this figures, each of the discs has six output terminals $a_1$, $b_1$, $c_1$, $a_2$, $b_2$, and $c_2$ and six bridging terminals $a_1'$, $b_1'$, $c_1'$, $a_2'$, $b_2'$ and $c_2'$; those terminals are all positioned substantially at one point of the outer periphery of the disc, i.e., on the front and back sides of the projecting portion of the insulating disc.

In order to connect the three discs in series, therefore, the output terminals $a_1$, $b_1$, $c_1$ of the first disc 51 are connected as the output of the three-phase coil to the output line member 54 through output wiring 56, and the bridging terminals $a_1'$, $b_1'$, ... $c_2'$ of the first disc 51 are connected to the output terminals $a_1$, $b_1$, ... $c_2$ of the second disc 52.

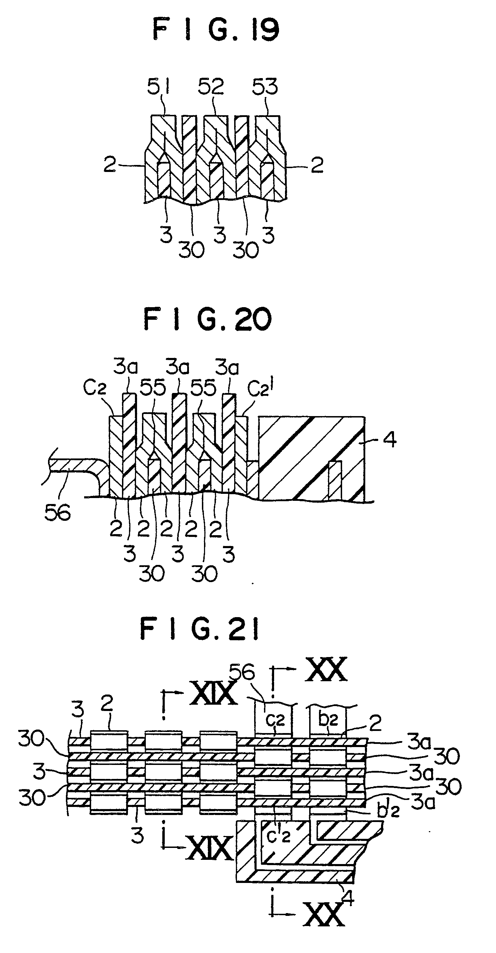

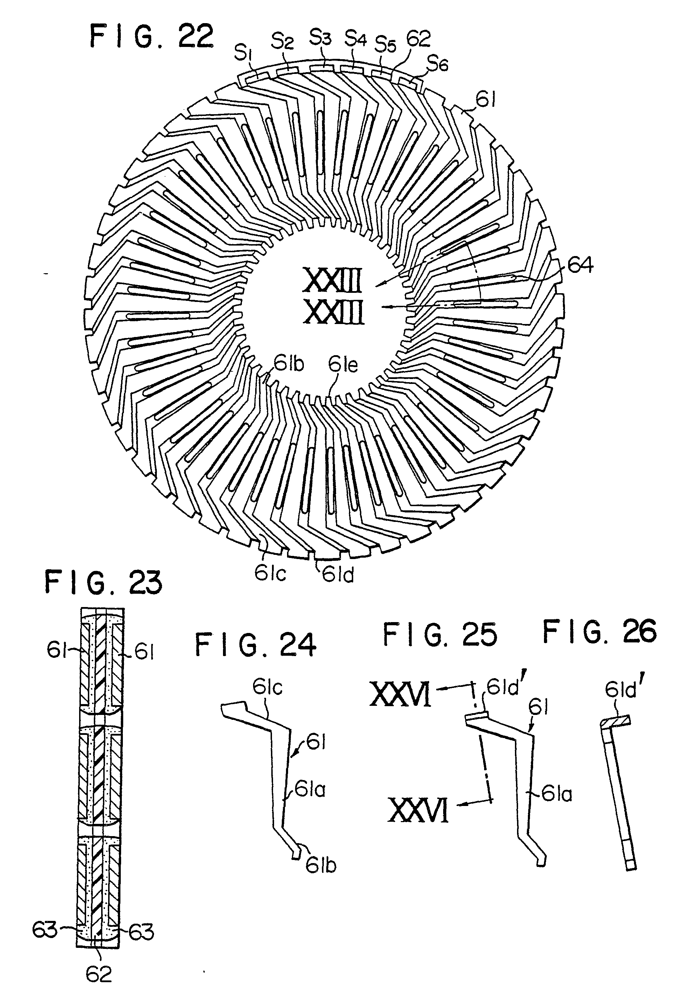

In this case, the bridging terminals $a_1'$, $b_1'$, ... $c_2'$ of the first disc-like coil and the output terminals $a_1$, $b_1$, ... $c_2$ are located back to back and connected as shown in Fig. 20 described hereinlater. Moreover, the other portions of the insulating disc than the projecting portions 3a need not be fixed between the discs as shown in Fig. 19.

Fig. 19 is a section (taken along the line XIX—XIX in Fig. 21) of a part of a multi-layered disc-like coil formed of three coil discs overlapped. 51, 52 and 53 are first, second and third discs, respectively.

Fig. 20 is a section (taken along the line XX—XX in Fig. 21) of the projecting portions 3a of the insulating discs of the multi-layered disc-like coil.

In Fig. 20, $c_2$ is an output terminal of the first disc, and $c_2'$ is a bridging terminal of the third disc 53 and connected to the bridging member 4.

55 are spot-welded portions to which the conductor portions 2 on the front and back sides of the insulating disc 3 are connected.

30 are inter-layer insulating members which may be made of the same material as that of the insulating disc 3, but are different in shape from the latter. Namely, as shown in Figs. 19 and 20, the inter-layer insulating members 30 are recessed at the position at which the projecting portions 3a of the insulating discs 3 are projecting.

As described above, by overlapping a plurality of coil discs and electrically connecting them in series, a relatively high voltage can be derived from output terminals $\phi_1$, $\phi_2$ and $\phi_3$ of the output wiring member and thus the output can be increased. Furthermore, use of this three-phase flat coil in a motor results in increase in the output thereof.

A fourth embodiment of the flat coil according to the present invention is shown in Fig. 22 in which a reference numeral 61 designates copper strips for forming portions of the coil windings, 62 designates an electrically insulating disc, such as glass cloth or mica disc, and 63 designates adhesive agent, such as heat-resisting and electrically insulating resin or ceramic. Each of the strips 61 is shaped into an overall configuration as shown in Figs. 24 and 25, and includes an effective area 61a, and first and second ineffective areas 61b and 61c. The strips 61 are welded to one another at their outer and inner ends 61d and 61e and fixed by the adhesive agent 63 to the front and back sides of the disc 62. 64 are ventilating holes.

Terminal portions $S_1$, $S_2$, $S_3$, $S_4$, $S_5$ and $S_6$ of the coil are formed by laterally bending outer free ends of the second ineffective areas 61c of the strips 61 to shape them into L-shaped portions 61d' as shown in Fig. 26.

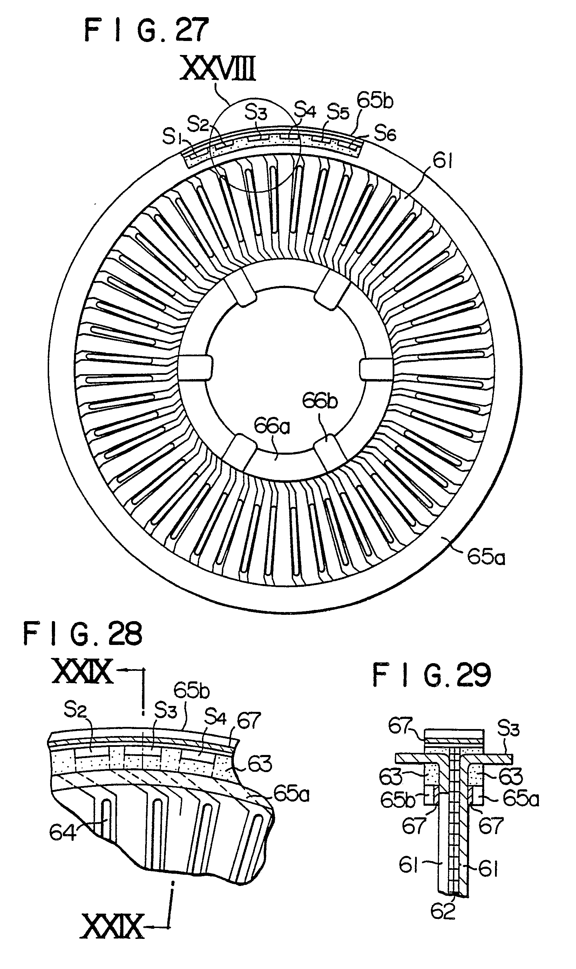

Fig. 27 shows a fifth embodiment of the coil of the present invention in which rings 65a, 65b, 66a and 66b are fixed to the outer and inner peripheries of the flat coil as shown in Fig. 22. The outer rings 65a, 65b are secured by welding at their inner surfaces facing the coil windings by way of interposed insulators 67, such as polyimide films, asbestos, mica or epoxy resin sheets. The inner rings 66a, 66b are fixed by caulking the ring 66b by way of insulator 67, so that radial gaps are provided for accommodating strain caused by heat.

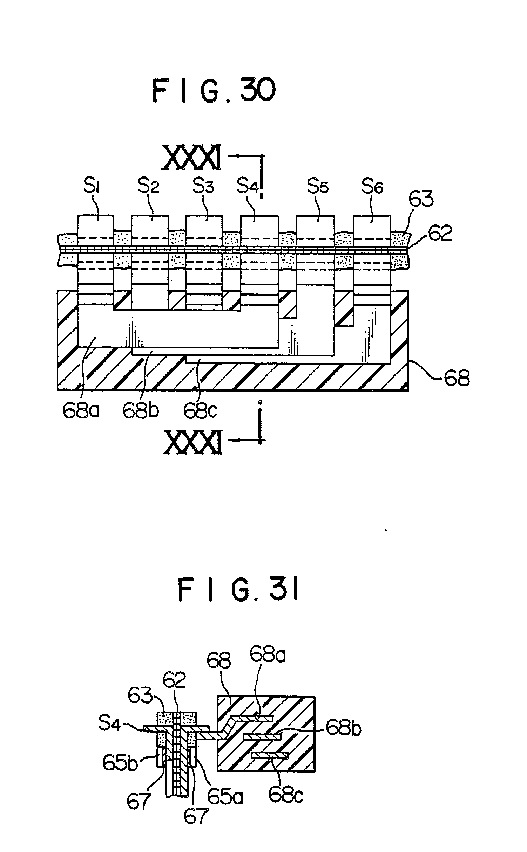

Terminal portions $S_1$, $S_2$, $S_3$, $S_4$, $S_5$ and $S_6$ are formed by laterally outwardly bending outer ends of the strips 61. The bent terminal portions are electrically connected to ends of bridging conductors molded in a bridging member 68 made of heat-resisting and electrically insulating material, in such a manner that as shown in Figs. 30 and 31 a conductor 68$a$ of the member 68 is connected to the terminal portions $S_1$ and $S_4$, a conductor 68$b$ of the member 68 to the terminal portions $S_2$ and $S_5$, and a conductor 68$c$ of the member 68 to the terminal portions $S_3$ and $S_6$.

With the above-mentioned arrangement, the connection between the bent terminal portions of the strips and ends of the conductors of the bridging member 68 is easily made by, for example, welding.

Although the example shown in Fig. 13 is a three-phase alternator, the coil of the present invention can be applied to a three-phase alternating current motor.

Furthermore, the three-phase flat coil of the present invention can be manufactured by pressing operation to form the copper strips followed by adhesion of a copper disc on the insulating plate to form a plurality of radially extending conductive strips. In other words, the plurality of radially extending copper strips 2 may be printed and formed by etching operation on the insulating disc 3 or by punching and pressing operation of a disc-like copper plate.

Moreover, the coil can be made by winding a magnet wire, then pressing and flattening it.

## Claims

1. Three-phase flat coil comprising a plurality of radial uninsulated conductor portions (2) disposed at both sides of an annular insulating disc (3), said conductor portions being through connected by connecting portions at the inner and outer disc peripheries to form three phase windings each of which spirally surrounds said disc, said conductor portions occupying alternately on the front side and on the back side every third one of the conductor positions, characterized in that said flat coil is formed by two three-phase half windings which surround said disc (3) in the form of a double spiral in the same direction and staggered, in that at one position of the outer disc periphery first adjacent ends ($a_1'$, $b_1'$, $c_1'$, $a_2'$, $b_2'$, $c_2'$) of said half windings are connected to a bridging member (4) located at one side of the disc in such a way that the first ends of the two three-phase half windings are connected together by means of the bridging member in three planes and so that the conductors are mutually insulated one from the other and in that at the same position on the outer disc periphery, but at the other side of the disc the adjacent second ends of said half windings are so arranged that they constitute terminals ($a_1$, $b_1$, $c_1$, $a_2$, $b_2$, $c_2$), the

terminals ($b_1$, $b_2$) of the center one of the three phase windings, being opposite in polarity to the terminals ($a_1$, $c_1$, $a_2$, $c_2$) of the other two phase windings.

2. Three-phase flat coil according to claim 1, characterized in that in said position of the disc periphery said disc (3) is provided with a radial projection (3a) for providing insulation between said first and said second ends of said half windings.

3. Three-phase flat coil according to claims 1 or 2, characterized in that said bridging member (4) includes an insulating member (4a) containing three bridging conductors (X', 4b, 4c, 4d) crossing each other three-dimensionally at the disc periphery.

4. Three-phase flat coil according to one of the claims 1 to 3, characterized in that said ends ($a_1'$, $b_1'$, $c_1'$, $a_2'$, $b_2'$, $c_2'$) of said half windings are bent off the disc periphery in L-shape.

5. Three-phase flat coil according to one of the claims 1 to 4, characterized in that at said other side of said disc (3; 53) coaxially therewith is disposed at least one further disc (51, 52) of the same kind bearing two half windings of the same kind, the first ends ($a_1'$, $b_1'$, $c_1'$, $a_2'$, $b_2'$, $c_2'$) of the two half windings being however, not connected to each other, but being axially connected to said terminals ($a_1$, $b_1$, $c_1$, $a_2$, $b_2$, $c_2$) of said first disc (53) and the second ends of said half windings constituting terminals ($a_1$, $b_1$, $c_1$, $a_2$, $b_2$, $c_2$).

## Patentansprüche

1. Dreiphasen-Flachspule mit einer Vielzahl radialer, an beiden Seiten einer ringförmigen isolierenden Scheibe (3) angeordneter Leiterbereiche (2), wobei die Leiterbereiche durch Verbinden von Bereichen am inneren und äußeren Scheibenumfang zur Bildung von drei Phasenwicklungen durchverbunden sind, von denen jede die Scheibe spiralförmig umgibt, wobei die Leiterbereiche auf der Vorderseite und der Rückseite abwechselnd jede dritte Leiterposition besetzen, dadurch gekennzeichnet, daß die Flachspule durch zwei Dreiphasen-Halbwicklungen gebildet ist, die die Scheibe (3) in der gleichen Richtung und gestaffelt in Forme einer Doppelspirale umgeben, und daß an einer Stelle des äußeren Scheibenumfangs erste angrenzende Ende ($a_1'$, $b_1'$, $c_1'$, $a_2'$, $b_2'$, $c_2'$) der Halbwicklungen mit einem an einer Seite der Scheibe derart angeordneten Überbrückungsteil verbunden sind, daß die ersten Enden der zwei Dreiphasen-Halbwicklungen von dem Überbrückungsteil in 3 Ebenen und derart miteinander verbunden werden, daß die Leiter gegenseitig voneinander isoliert sind, und daß an derselben Stelle auf dem äußeren Scheibenumfang, jedoch auf den anderen Seiten der Scheibe die angrenzenden zweiten Enden der Halbwicklungen derart angeordnet sind, daß sie Anschlüsse ($a_1$, $b_1$, $c_1$, $a_2$, $b_2$, $c_2$) bilden, wobei die Anschlüsse ($b_1$, $b_2$) der mittleren der drei Phasenwicklungen eine zu den Anschlüssen ($a_1$, $c_1$, $a_2$, $c_2$)

der beiden anderen Phasenwicklungen entgegengesetzte Polarität haben.

2. Dreiphasen-Flachspule nach Anspruch 1, dadurch gekennzeichnet, daß die Stelle am Scheibenumfang der Scheibe (3) einen radialen Vorsprung (3a) zur Schaffung einer Isolierung zwischen den ersten und zweiten Enden der Halbwicklungen aufweist.

3. Dreiphasen-Flachspule nach Anspruch 1 oder 2, dadurch gekennzeichnet, daß das Überbrücksteil (4) ein isolierendes Teil (4a) aufweist, das drei sich am Scheibenumfang dreidimensional überkreuzende Überbrückungsleiter (X'; 4b, 4c, 4d) enthält.

4. Dreiphasen-Flachspule nach einem der Ansprüche 1 bis 3, dadurch gekennzeichnet, daß die Enden ($a_1'$, $b_1'$, $c_1'$, $a_2'$, $b_2'$, $c_2'$) der Halbwicklungen L-förmig vom Scheibenumfang weggebogen sind.

5. Dreiphasen-Flachspule nach einem der Ansprüche 1 bis 4, dadurch gekennzeichnet, daß an der anderen Seite der Scheibe (3; 53) und koaxial zu dieser mindestens eine weitere Scheibe (51, 52) derselben Art angeordnet ist, die zwei Halbwicklungen derselben Art trägt, wobei die ersten Enden ($a_1'$, $b_1'$, $c_1'$, $a_2'$, $b_2'$, $c_2'$) der zwei Halbwicklungen jedoch nicht miteinander, sondern axial mit den Anschlüssen ($a_1$, $b_1$, $c_1$, $a_2$, $b_2$, $c_2$) der ersten Scheibe (53) und den zweiten Enden der Halbwicklungen, die Anschlüsse ($a_1$, $b_1$, $c_1$, $a_2$, $b_2$, $c_2$) bilden verbunden sind.

## Revendications

1. Bobine plate triphasée comprenant un ensemble de parties de conducteurs radiales non isolées (2) disposées des deux côtés d'un disque isolant annulaire (3), ces parties de conducteur étant connectées mutuellement par des parties de connexion situées sur les périphéries intérieure et extérieure du disque, pour former des enroulements triphasés, dont chacun entoure le disque en spirale, ces parties de conducteurs occupant alternativement sur la face avant et sur la face arrière une position de conducteur sur trois,

caractérisée en ce que cette bobine plate est formée par deux demi-enroulement triphasés qui entourent le disque (3) sous la forme d'une double spirale, en étant orientés dans le même sens et décalés,

en ce qu'à une position de la périphérie extérieure du disque, des premières extrémités adjacentes ($a_1'$, $b_1'$, $c_1'$, $a_2'$, $b_2'$, $c_2'$) des demi-enroulements sont connectées à un élément de raccordement (4) placé sur une face du disque, d'une manière telle que les premières extrémités des deux demi-enroulements triphasés soient connectées ensemble au moyen de l'élément de raccordement dans trois plans, et de manière que les conducteurs soient mutuellement isolés les uns par rapport aux autres, et en ce qu'à la même position sur la périphérie extérieure du disque, mais sur l'autre face du disque, les secondes extrémités adjacentes des demi-enroulements sont disposées de façon à constituer des bornes ($a_1$, $b_1$, $c_1$, $a_2$, $b_2$, $c_2$), les bornes ($b_1$, $b_2$) et l'enroulement central parmi les enroulements triphasés ayant une polarité opposée aux bornes ($a_1$, $c_1$, $a_2$, $c_2$) des deux autres enroulements triphasés.

2. Bobine plate triphasée selon la revendication 1, caractérisée en ce qu'à ladite position de la périphérie du disque, le disque (3) comporte une saillie radiale (3a) destinée à assurer l'isolation entre les premières et secondes extrémités des demi-enroulements.

3. Bobine plate triphasée selon les revendications 1 ou 2, caractérisée en ce que l'élément de raccordement (4) comprend un élément isolant (4a) contenant trois conducteurs de raccordement (X'; 4b, 4c, 4d) qui se croisent de façon tridimensionnelle à la périphérie du disque.

4. Bobine plate triphasée selon l'une des revendications 1 à 3, caractérisé en ce que les extrémités ($a_1'$, $b_1'$, $c_1'$, $a_2'$, $b_2'$, $c_2'$) des demi-enroulements sont courbées en forme de L de façon à s'écarter de la périphérie du disque.

5. Bobine plate triphasée selon l'une des revendications 1 à 4, caractérisée en ce que sur l'autre face du disque (3; 54) et en position coaxiale par rapport à celuc-ci, se trouve au moins un disque supplémentaire (51, 52) du même genre, portant deux demi-enroulement du même genre, les premières extrémités ($a_1'$, $b_1'$, $c_1'$, $a_2'$, $b_2'$, $c_2'$) des deux demi-enroulements n'étant cependant pas connectées les unes aux autres, mais étant connectées axialement aux bornes ($a_1$, $b_1$, $c_1$, $a_2$, $b_2$, $c_2$) du premier disque (53), et les secondes extrémités de ces demi-enroulements constituant des bornes ($a_1$, $b_1$, $c_2$, $a_2$, $b_2$, $c_2$).

# F I G. 1

# F I G. 2

1

# F I G . 3

$\frac{0°}{}$ a-PHASE

b-PHASE   c-PHASE

$\frac{60°}{P}$

$\frac{120°}{P}$

$\frac{180°}{P}$

$\frac{240°}{P}$

$\frac{300°}{P}$

$\frac{360°}{P}$

# F I G . 4

$0°$

a-PHASE   c-PHASE

b-PHASE

$\frac{60°}{P}$

$\frac{120°}{P}$

$\frac{180°}{P}$

$\frac{240°}{P}$

$\frac{300°}{P}$

$\frac{360°}{P}$

# F I G. 5

# F I G. 6

# F I G. 7

a₁ ⊕ ○――∿∿∿∿∿――○ a₂ ⊖

b₂ ⊕ ○――∿∿∿∿∿――○ b₁ ⊖          NT

c₁ ⊕ ○――∿∿∿∿∿――○ c₂ ⊖

# F I G. 8

# F I G. 9

F I G. 10

# F I G. II

# F I G. I2

# F I G . 13

# F I G.14

# F I G. 15

# F I G. 16

# F I G. 17

a1 ○ ———— ○ a'1
b1 ○ ———— ○ b'1
c1 ○ ———— ○ c'1

a2 ○ ———— ○ a'2
b2 ○ ———— ○ b'2
c2 ○ ———— ○ c'2

# F I G. 18

## F I G. 19

## F I G. 20

## F I G. 21

FIG. 22

FIG. 23

FIG. 24

FIG. 25

FIG. 26

F I G. 27

XXVIII

$S_1$ $S_2$ $S_3$ $S_4$ $S_5$ 65b

$S_6$

61

66b

66a

65a

F I G. 28

XXIX

65b

$S_2$ $S_3$ $S_4$ 67

63

65a

64

XXIX

F I G. 29

67 $S_3$

63 63

65b 65a

67 67

61 61

62

# FIG. 30

XXXI

S1  S2  S3  S4  S5  S6    63

62

68

68a  68b  68c

XXXI

# FIG. 31

68    68a

63  62

S4    68b

65b

67    67  65a  68c